# EUROPEAN PATENT APPLICATION

(11) **EP 1 985 878 A1**
(43) Date of publication of application: **29.10.2008**
(21) Application number: 07706494.7
(22) Date of filing: 10.01.2007
(51) Int. Cl.: F16D 23/06

(54) **SYNCHRONIZING DEVICE OF TRANSMISSION**

(30) Priority: 14.02.2006 JP 2006036020
(71) Applicant: Nissan Motor Co., Ltd., Kanagawa 221-0023 (JP)
(72) Inventor: YOSHINO, Masashi c/i IP Dept. Nissan Motor Co., Ltd., Kanagawa 243-0123 (JP)
(74) Representative: Grünecker, Kinkeldey, Stockmair & Schwanhäusser Anwaltssozietät
(86) International application number: PCT/JP2007/050147
(87) International publication number: WO 2007/094140

(57) **Abstract**

In a synchronizing device of a transmission, in which when a coupling sleeve is slidingly moved on a synchronizer hub during gear shift operation, the coupling sleeve is engaged with a balk ring by a rotating synchronizing action, and then the coupling sleeve is further slidingly moved until the coupling sleeve is engaged with a clutch gear to complete the gear shift operation, the synchronizing device includes a guide rail mechanism, provided between the coupling sleeve and the synchronizer hub, to suppress a fall of the coupling sleeve during the sliding movement of the coupling sleeve. The guide rail mechanism is set in a sliding-movement range from a neutral position of the coupling sleeve to at least a position where a coupling-sleeve chamfer and a balk-ring chamfer abut with each other.

## Description

### TECHNICAL FIELD

The present invention relates to a synchronizing device of a transmission in which when a coupling sleeve is slidingly moved on a synchronizer hub during gear shift operation, the coupling sleeve is engaged with a balk ring by a synchronizing action, and then the coupling sleeve is further slidingly moved until it is engaged with a clutch gear to complete the gear shift operation.

### BACKGROUND ART

In a conventional synchronizing device of a transmission, during gear shift operation that a coupling sleeve is slidingly moved, the chamfers of the coupling sleeve are brought into abutted-engagement with respective balk-ring chamfers to prevent sliding movement of the coupling sleeve, and then the taper-cone surface of the balk ring presses against the taper-cone surface of the clutch gear to create friction torque (= synchronizing force), thereby achieving a rotating synchronizing action. After the coupling sleeve has been brought into meshed-engagement with the balk ring by the rotating synchronizing action, the coupling sleeve is further slidingly moved until it is engaged with a clutch gear to complete the gear shift operation (see the following patent document 1).
Patent Document 1: Japanese Patent Provisional Publication No. 5-026257

### DISCLOSURE OF THE INVENTION

However, in the conventional synchronizing device of the transmission, when the coupling sleeve, whose internal splines engage with external splines formed on a synchronizer hub, is slidingly moved during gear shift operation, owing to a play defined between the tooth face of the internal spline and the tooth face of the external spline as well as a short length of the spline-engaged section of the synchronizer hub and the coupling sleeve, the coupling sleeve tends to slide in a slightly fallen state. As a result of this, the coupling-sleeve chamfers and the balk-ring chamfers cannot be evenly contacted each other around the entire circumference, but locally unevenly contacted each other. Owing to such a phenomenon of the chamfers unevenly contacted each other, the two opposing taper-cone surfaces are unevenly contacted each other. This leads to the problem of uneven wear of the balk ring or the sticking balk-ring taper-cone surface, thus degrading the rotating synchronizing performance.

It is, therefore, in view of the previously-described disadvantages of the prior art, an object of the invention to provide a synchronizing device of a transmission capable of ensuring reliable gear shift operation by a smooth and stable rotating synchronizing action without lowering the synchronizing performance for a long term.

In order to accomplish the aforementioned and other objects of the present invention, a synchronizing device of a transmission, in which when a coupling sleeve is slidingly moved on a synchronizer hub during gear shift operation, the coupling sleeve is engaged with a balk ring by a rotating synchronizing action, and then the coupling sleeve is further slidingly moved until the coupling sleeve is engaged with a clutch gear to complete the gear shift operation, comprises a guide rail mechanism provided between the coupling sleeve and the synchronizer hub to suppress or prevent a fall of the coupling sleeve during the sliding movement of the coupling sleeve, the guide rail mechanism being set in a sliding-movement range from a neutral position of the coupling sleeve to at least a position where a coupling-sleeve chamfer and a balk-ring chamfer abut with each other.

### BRIEF DESCRIPTION OF THE DRAWINGS

[Figure 1] Fig. 1 is a longitudinal cross-sectional view showing a first embodiment of a synchronizing device of a transmission, taken along the line A-A of Fig. 2.
[Figure 2] Fig. 2 is a front elevation view showing the assembled state of the synchronizing device of the transmission of the first embodiment.
[Figure 3] Fig. 3 is a front elevation view showing a synchronizer hub of the synchronizing device of the transmission of the first embodiment.
[Figure 4] Fig. 4 is a front elevation view showing a balk ring of the synchronizing device of the transmission of the first embodiment.
[Figure 5] Fig. 5 is a front elevation view showing a coupling sleeve of the synchronizing device of the transmission of the first embodiment.
[Figure 6] Fig. 6 is a cross-sectional view showing the spline-engaged section of a synchronizer hub and a coupling sleeve in a conventional synchronizing device.
[Figure 7] Figs. 7A-7C are explanatory views respectively showing an indexing state, a balk state, and a gear-shift completion state during a synchronizing action, in the synchronizing device of the first embodiment.
[Figure 8] Fig. 8 is a longitudinal cross-sectional view showing a second embodiment of a synchronizing device of a transmission, taken along the line A-A of Fig. 9.
[Figure 9] Fig. 9 is a front elevation view showing the assembled state of the synchronizing device of the transmission of the second embodiment.
[Figure 10] Fig. 10 is a front elevation view showing a synchronizer hub of the synchronizing device of the transmission of the second embodiment.
[Figure 11] Fig. 11 is a front elevation view showing a balk ring of the synchronizing device of the transmission of the second embodiment.
[Figure 12] Fig. 12 is a front elevation view showing a coupling sleeve of the synchronizing device of the transmission of the second embodiment.

### DETAILED DESCRIPTION

According to the synchronizing device of the transmission of the invention, when the coupling sleeve is slidingly moved on the synchronizer hub during gear shift operation, the coupling sleeve is engaged with the balk ring by a rotating synchronizing action, and then the coupling sleeve is further slidingly moved until it is engaged with the clutch gear to complete the gear shift operation.
During the gear shift operation, it is possible to suppress an undesirable fall of the coupling sleeve during the sliding movement by means of the guide rail mechanism provided between the coupling sleeve and the synchronizer hub, in the sliding-movement range from the neutral position of the coupling sleeve to at least the position where the coupling-sleeve chamfer and the balk-ring chamfer abut with each other.
For instance, in a conventional manner, suppose that the spline-engaged section (the spline-connection section) of the synchronizer hub and the coupling sleeve also serves as a guide for sliding movement of the coupling sleeve. In such a case, the length of the spline-engaged section tends to become short. Additionally, there is a play defined between the tooth faces of the splines engaged with each other. Owing to the play, the coupling sleeve tends to slide in a slightly fallen state. As a result of this, a phenomenon of the coupling-sleeve chamfers and the balk-ring chamfers unevenly contacted each other occurs or a phenomenon of the balk-ring taper-cone surface and the clutch-gear taper-cone surface unevenly contacted each other occurs. This leads to the problem of uneven wear of the balk ring or the sticking balk-ring taper-cone surface, thus degrading the synchronizing performance.
In contrast to the above, according to the synchronizing device of the invention, only a spline-connection function that circumferential movement of the coupling sleeve relative to the synchronizer hub is prevented and axial sliding movement of the coupling sleeve relative to the synchronizer hub is permitted, is assigned to the spline-engaged section of the synchronizer hub and the coupling sleeve. Additionally, a guide function for sliding movement of the coupling sleeve is assigned to the guide rail mechanism separated from the spline-engaged section.
As discussed above, the degraded synchronizing performance arises from the coupling-sleeve chamfers and the balk-ring chamfers unevenly contacted each other. To avoid this, the guide rail mechanism is provided or set in the sliding-movement range from the neutral position of the coupling sleeve to at least the position where the coupling-sleeve chamfer and the balk-ring chamfer abut with each other, thus effectively preventing the coupling-sleeve chamfers from being unevenly contacted with the balk-ring chamfers.
As a result of this, it is possible to ensure reliable gear shift operation by a smooth and stable rotating synchronizing action without lowering the synchronizing performance for a long term.

Hereinafter described in reference to the first and second embodiments shown in drawings are the preferred embodiments realizing the synchronizing device of the transmission of the invention.

### [FIRST EMBODIMENT]

First, the construction of the device is hereunder described.

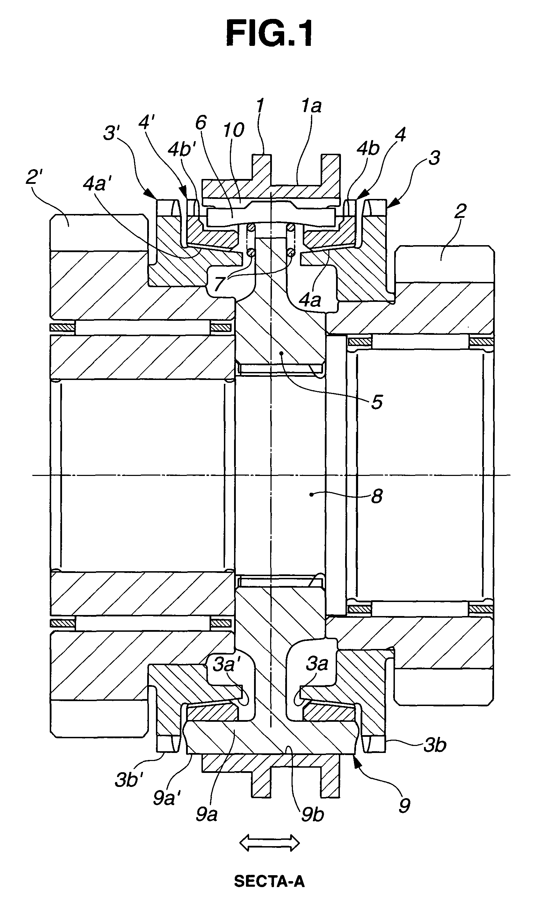

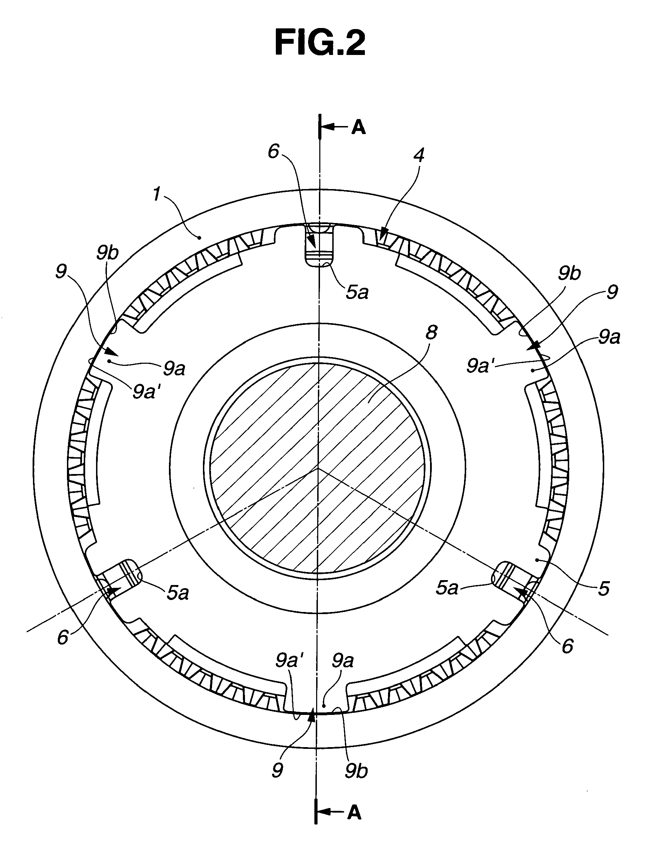

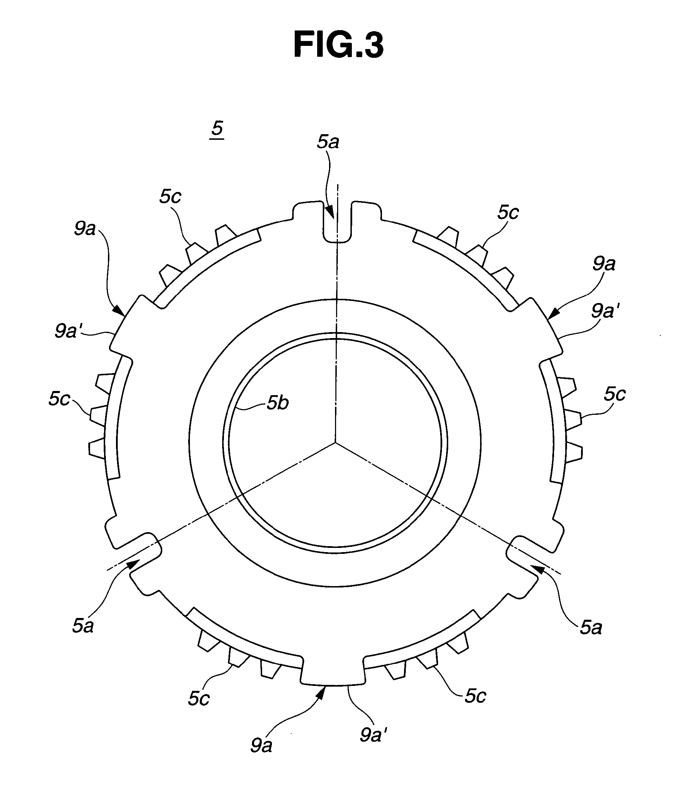

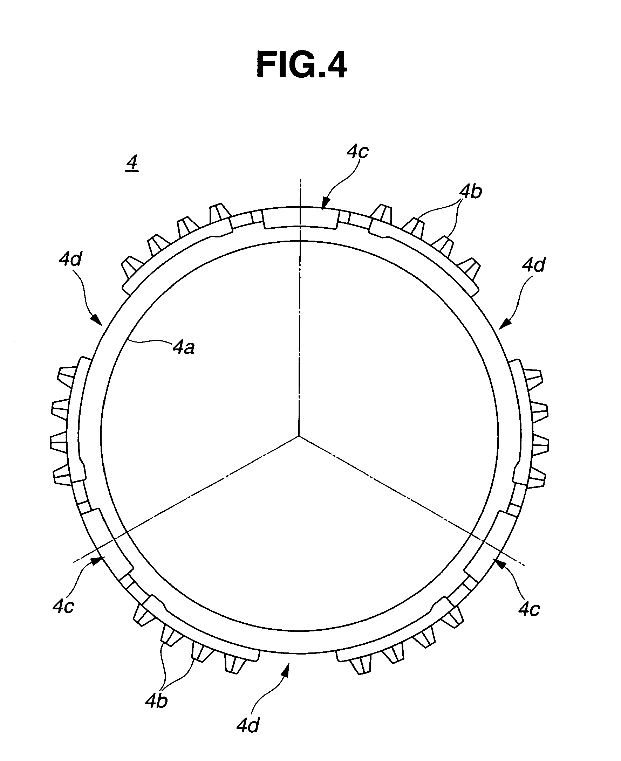

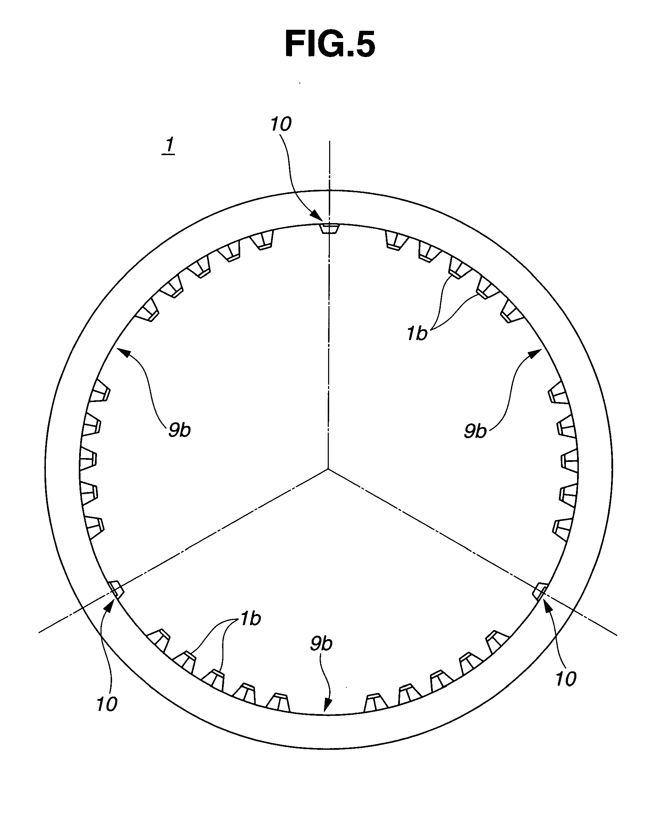

Fig. 1 is the longitudinal cross-sectional view showing the first embodiment of the synchronizing device of the transmission, taken along the line A-A of Fig. 2. Fig. 2 is the front elevation view showing the assembled state of the synchronizing device of the transmission of the first embodiment. Fig. 3 is the front elevation view showing the synchronizer hub of the synchronizing device of the transmission of the first embodiment. Fig. 4 is the front elevation view showing the balk ring of the synchronizing device of the transmission of the first embodiment. Fig. 5 is the front elevation view showing the coupling sleeve of the synchronizing device of the transmission of the first embodiment.

As shown in Figs. 1-2, the synchronizing device of the transmission of the first embodiment is provided with a coupling sleeve 1, main gears 2, 2', clutch gears 3, 3', balk rings 4, 4', a synchronizer hub 5, insert keys 6, spreader springs 7, 7, a main shaft 8, a guide rail mechanism 9, and insert-key internal splines 10.
The basic construction of the synchronizing device is hereunder described.

As shown in Fig. 1, main gears 2, 2' are rotatably supported on main shaft 8 by means of needle bearings in such a manner as to be axially spaced apart from each other. The number of gear teeth of main gear 2 differs from that of main gear 2'. In the transmission of the shown embodiment, concretely, main gear 2 serves as a fourth speed gear, whereas main gear 2' serves as a second speed gear.

As shown in Fig. 1, clutch gears 3, 3' are integrally connected to respective main gears 2, 2' by way of press-fitting, such that clutch gears 3, 3' axially oppose each other.
Each of clutch gears 3, 3' is formed with a recessed portion opposing to synchronizer hub 5. The bottom faces of the recessed portions are formed with clutch-gear taper-cone surfaces 3a, 3a' that are sloped or tapered in such a manner as to be symmetrically arranged with each other. Additionally, clutch gears 3, 3' are formed on their outer peripheries with clutch-gear external-spline toothed portions 3b, 3b', each of which is engageable with the internal-spline toothed portion of coupling sleeve 1. These clutch-gear external-spline toothed portions have respective clutch-gear chamfers opposing to coupling-sleeve chamfers. The technical term "chamfer" means a triangular chamfered portion formed at the end of each of the splines engaged with each other to ensure smooth sliding engagement between the splines engaged.

As shown in Figs. 1-2, the previously-noted insert keys 6 are synchronizing members, which are fitted into respective insert-key slots 5a formed in three places of the outer periphery of synchronizer hub 5.
Insert key 6 is supported by means of synchronizer hub 5, coupling sleeve 1, and spreader springs 7, 7. The insert key is positioned by means of the insert-key raised sections formed on the outer periphery of insert key 6 and the insert-key slots of coupling sleeve 1 in a lock state where the insert-key raised sections are fitted in the respective insert-key slots (see Fig. 1).
That is, insert key 6 rotates together with synchronizer hub 5. During gear shift operation, the insert.key is axially slidable synchronously with sliding movement of coupling sleeve 1.

As shown in Figs. 1-2, the previously-noted synchronizer hub 5 is disposed in an internal space sandwiched between a pair of main gears 2, 2', and between a pair of clutch gears 3, 3', and between a pair of balk rings 4, 4'. The synchronizer hub is a synchronizing member, which is splined to main shaft 8.
As shown in Fig. 3, synchronizer hub 5 is formed on its inner peripheral surface with internal splines 5b, which engage with external splines of main shaft 8.
As shown in Fig. 3, synchronizer hub 5 is formed on its outer periphery with three circumferentially equidistant-spaced insert-key slots 5a.
As shown in Fig. 3, synchronizer hub 5 is formed on its outer peripheral surface with external splines 5c, which engage with the internal splines (internal teeth 1b) of coupling sleeve 1.

As shown in Figs. 1-2, balk rings 4, 4' are synchronizing members that synchronize rotation of each of main gears 2, 2' with rotation of synchronizer hub 5.
Each of balk rings 4, 4' is axially movable and circumferentially rotatable relative to synchronizer hub 5 by a predetermined circumferential displacement (a displacement required for alignment of the chamfers of the splines engaged: hereinafter is referred to as an "indexing quantity").
As shown in Fig. 4, balk rings 4, 4' are formed on their inner peripheral surfaces with balk-ring taper-cone surfaces 4a, 4a', which are brought into taper-fitted-engagement with (into contact with) respective clutch-gear taper-cone surfaces 3a, 3a'. A number of oil grooves are formed in each of balk-ring taper-cone surfaces 4a, 4a'.
As shown in Fig. 4, balk rings 4, 4' are formed on their outer peripheral surfaces with balk-ring external-spline toothed portions 4b, 4b', each of which is engageable with the internal-spline toothed portion of coupling sleeve 1. These balk-ring external-spline toothed portions 4b, 4b' have respective balk-ring chamfers opposing to the coupling-sleeve chamfers.
As shown in Fig. 4, balk ring 4 is formed on its outer periphery with three circumferentially equidistant-spaced insert-key contact grooves 4c, whereas balk ring 4' is also formed on its outer periphery with three circumferentially equidistant-spaced insert-key contact grooves 4c'.

As shown in Figs. 1-2, the previously-noted coupling sleeve 1 is an input member, which is disposed between main gears 2, 2' to produce a shifting force.
Coupling sleeve 1 is in splined-engagement with synchronizer hub 5 for co-rotation with synchronizer hub 5. The coupling sleeve is axially slidable during gear shift operation. As seen in Figs. 1 and 5, coupling sleeve 1 is formed on its inner peripheral surface with three circumferentially equidistant-spaced insert-key internal splines 10 having respective insert-key ways that support insert keys 6.
As seen in Fig. 1, coupling sleeve 1 is formed in its outer peripheral surface with a fork groove 1a into which a shift fork (not shown) is fitted.
As seen in Fig. 5, coupling sleeve 1 is formed in its inner peripheral surface with internal splines 1b engaged with the external splines of synchronizer hub 5 at circumferential positions except the insert-key internal splines 10. Each of internal splines 1b has coupling-sleeve chamfers formed on both ends.

The construction of guide rail mechanism 9 of the first embodiment is hereunder described in detail in reference to Figs. 1 to 5.
In the synchronizing device of the transmission of the first embodiment, when coupling sleeve 1 is slidingly moved on synchronizer hub 5 during gear shift operation, the coupling sleeve is engaged with balk ring 4 (or balk ring 4') by a rotating synchronizing action, and then the coupling sleeve is further slidingly moved until it is engaged with clutch gear 3 (or clutch gear 3') to complete the gear shift operation.

In the first embodiment, guide rail mechanism 9 is provided between coupling sleeve 1 and synchronizer hub 5 to suppress a fall of coupling sleeve 1 during sliding movement of the coupling sleeve. The guide rail mechanism 9 is set or provided in a sliding-movement range from the neutral position of coupling sleeve 1 to at least the position where the coupling-sleeve chamfer and the balk-ring chamfer abut with each other.

As seen in Fig. 1, the above-mentioned guide rail mechanism 9 is comprised of a guide rail 9a formed integral with synchronizer hub 5 in such a manner as to be axially protruded from the outer peripheral portion of the synchronizer hub in two opposite axial directions, and a guide-rail contact surface 9b in contact with an axially-extending outer peripheral guide way 9a' of guide rail 9a.

As seen in Fig. 2, guide rail mechanism 9, comprised of guide rail 9a and guide-rail contact surface 9b, is provided in three circumferentially equiangular-spaced places.
The setting position of each of guide rail mechanisms 9 is determined as an intermediate position between the two insert keys 6, 6 circumferentially adjacent to each other.

As seen in Fig. 4, balk rings 4, 4' have guide-rail insertion recessed portions 4d, 4d' formed by partially cutting or pulling out balk-ring external splines 4b, 4b' formed in their outer peripheral portions.
As can be seen in Fig. 1, guide rails 9a are formed to be axially protruded from the outer peripheral portion of synchronizer hub 5 through respective guide-rail insertion recessed portions 4d, 4d' to opposite axial positions at which the guide rails cover balk rings 4, 4'. That is to say, guide rails 9a are set or provided in such a manner as to overhang balk rings 4, 4'.
As seen in Fig. 5, on the other hand, guide-rail contact surfaces 9b are bottom lands defined by partially cutting or pulling out internal splines 1b formed in the inner peripheral portion of coupling sleeve 1.
Each of guide-rail contact surfaces 9b is formed on the inner periphery of coupling sleeve 1 over the entire axial width.

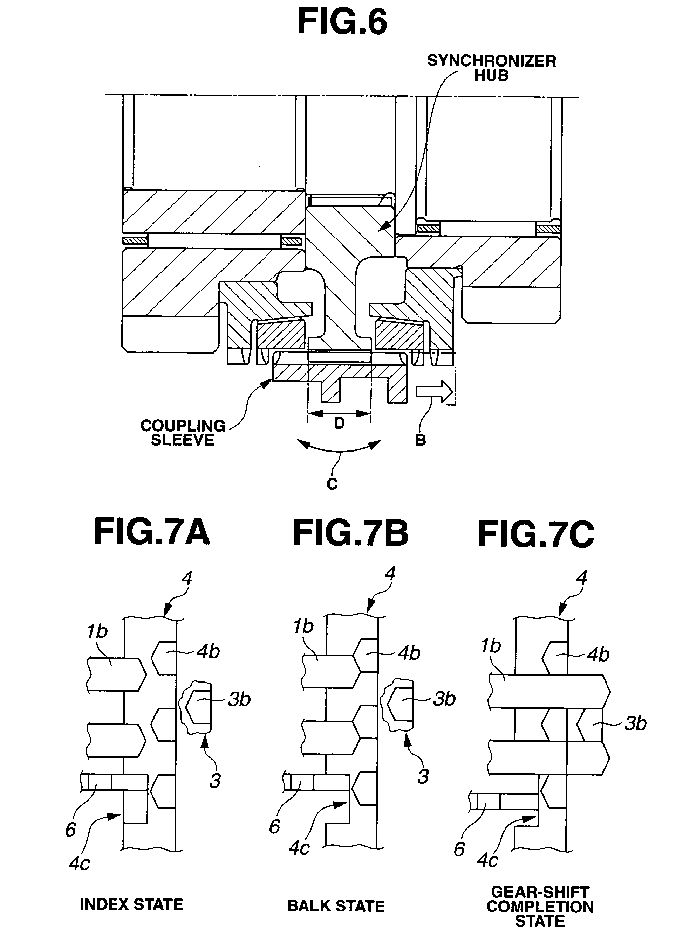

Hereunder explained is the operation.
In the conventional synchronizing device of the transmission, when a coupling sleeve, whose internal splines engage with external splines formed on a synchronizer hub, is slidingly moved in the direction indicated by the arrow B in Fig. 6 during gear shift operation, sliding movement of the coupling sleeve occurs with the synchronizer-hub/coupling-sleeve spline-engaged section conditioned in a slightly fallen state wherein the coupling sleeve is slightly fallen in either one of two opposite directions indicated by the arrow C or in an unstable state wherein the coupling sleeve may be fallen in either one of these two opposite directions. This arises from the following two reasons.
(a) The axial dimension of each of the external splines of the synchronizer hub is limited or restricted due to the interval (distance) between the axially opposing balk rings or the interval (distance) between the axially opposing clutch gears, and therefore the length D of the spline-engaged section becomes short.
(b) It is necessary to provide a play between the tooth faces of the splines engaged with each other in order to ensure or permit axial sliding movement of the coupling sleeve. The magnitude of the play is determined by the machining accuracy of each of the tooth faces and the cumulative pitch error, and the like.
   As a result of this, the coupling-sleeve chamfers and the balk-ring chamfers cannot be evenly contacted each other around the entire circumference, but locally unevenly contacted each other. Owing to such a phenomenon of the chamfers unevenly contacted each other, the opposing taper-cone surfaces are unevenly contacted each other. This leads to the problem of uneven wear of the balk ring or the sticking balk-ring taper-cone surface, thus degrading the synchronizing performance.

In contrast to the above, the synchronizing device of the transmission of the invention is configured to ensure reliable gear shift operation by a smooth and stable rotating synchronizing action without lowering the synchronizing performance for a long term.

That is, in the conventional synchronizing device, the spline-engaged section of the synchronizer hub and the coupling sleeve has both a spline-connection function that circumferential movement of the coupling sleeve relative to the synchronizer hub is prevented and axial sliding movement of the coupling sleeve relative to the synchronizer hub is permitted and a guide function for sliding movement of the coupling sleeve.
In such a case, when making much account of an enhanced performance in sliding movement of the coupling sleeve (in other words, enhanced spline-connection function) by setting the play of the spline-engaged section to a great value, the guide function is lost.

As set forth above, from a viewpoint that it is impossible or difficult to reconcile the spline-connection function and the guide function only by means of the spline-engaged section, according to the invention, only the spline-connection function is assigned to the spline-engaged section of synchronizer hub 5 and coupling sleeve 1. The guide function for sliding movement of coupling sleeve 1 is assigned to guide rail mechanism 9 separated from the spline-engaged section.

As discussed previously, the degraded synchronizing performance arises from the chamfers of coupling sleeve 1 and the chamfers of each of balk rings 4, 4', unevenly contacted each other. To avoid this, guide rail mechanism 9 is provided or set in the sliding-movement range from the neutral position of coupling sleeve 1 to at least the position where the coupling-sleeve chamfer and the balk-ring chamfer abut with each other, thereby effectively preventing the coupling-sleeve chamfers from being unevenly contacted with the balk-ring chamfers.
As a result of this, it is possible to ensure reliable gear shift operation by a smooth and stable rotating synchronizing action without lowering the synchronizing performance for a long term.

The "shifting-period synchronizing action" and the "coupling-sleeve fall preventative action" of the synchronizing device of the transmission of the first embodiment are hereunder described.

[SHIFTING-PERIOD SYNCHRONIZING ACTION]
The shifting-period synchronizing action performed by the synchronizing device of the first embodiment is made according to the following procedures.
(a) As shown in Fig. 1, a clutch (not shown) is released in the neutral state of the synchronizing device, to shut off power transmission from a driving power source.
(b) When coupling sleeve 1 slides rightwards (viewing Fig. 1) from the neutral position shown in Fig. 1 by means of the shift fork (not shown), insert keys 6 axially moves together with coupling sleeve 1. As a result, the ends of insert keys 6 are brought into contact with respective insert-key contact grooves 4c.
(c) When coupling sleeve 1 further slides, insert keys 6, brought into contact with insert-key contact grooves 4c, push the right-hand balk ring 4 toward the clutch gear, and thus balk-ring taper-cone surface 4a is brought into contact with clutch-gear taper-cone surface 3a.
   At this time, owing to an initial contact friction, balk ring 4 relatively rotates by an angular displacement substantially corresponding to each insert-key contact groove 4c. As a result of this, as shown in Fig. 7A, the chamfer of each of internal splines 1b of coupling sleeve 1 and the chamfer of each of external splines 4b of balk ring 4 are arranged to oppose each other. This state is generally called as an "index state".
(d) When coupling sleeve 1 further slides from the index state shown in Fig. 7A, the coupling-sleeve chamfers are brought into contact with the respective balk-ring chamfers. This state is generally called as a "balk state".
   In the "balk state" sliding movement of coupling sleeve 1 is prevented, and then balk-ring taper-cone surface 4a begins to press against clutch-gear taper-cone surface 3a from the chamfer contact position at which an input can be transferred through the chamfers contacted each other, so as to create friction torque (= synchronizing force). Owing to the created friction torque, rotation of clutch gear 3 and rotation of main gear 2 gradually approach closer to rotation of coupling sleeve 1, such that the rotating synchronizing state of these members is completed.
(e) As soon as the previously-noted rotating synchronizing action has been completed, the friction torque becomes zero. The force that prevents sliding movement of coupling sleeve 1 becomes also released, and thus coupling sleeve 1 becomes conditioned again in the slidable state. As shown in Fig. 7C, each of internal splines of coupling sleeve 1 pushes through the associated two adjacent external splines of balk ring 4, and then the internal splines engage with the external splines of clutch gear 3, to complete the gear shift operation.

### [COUPLING-SLEEVE FALL PREVENTATIVE ACTION]

As discussed above, during gear shift operation coupling sleeve 1 is slidingly moved. However, suppose that coupling sleeve 1 is slidingly moved under the slightly fallen state. In the balk state where the coupling-sleeve chamfers and the balk-ring chamfers are contacted each other and sliding movement of the coupling sleeve is prevented, a phenomenon of the chamfers unevenly contacted each other, in which the coupling-sleeve chamfers and the balk-ring chamfers cannot be evenly contacted each other around the entire circumference, but locally unevenly contacted each other, occurs. That is, in the balk state, there are a first group of chamfers in contact and a second group of chamfers out of contact.

In contrast to the above, in the first embodiment, when coupling sleeve 1 is slidingly moved from its neutral position to the position where the coupling-sleeve chamfer is brought into contact with the balk-ring chamfer, as can be seen from the arrow of Fig. 1, guide-rail contact surfaces 9b, each of which is formed on the inner periphery of coupling sleeve 1 over the entire axial width, slide while being kept in contact with the respective axially-extending outer peripheral guide ways 9a' of guide rail 9a. In this manner, coupling sleeve 1 slides, while being positively guided by means of guide rail mechanism 9 (the ring guide rail mechanism), to which the guide function is assigned. Thus, regardless of the limited overall linear dimension of each of the external splines of synchronizer hub 5, engaged with the internal splines of coupling sleeve 1, and the machining accuracy of each of the tooth faces of the splines engaged with each other, it is possible to prevent an undesirable fall of coupling sleeve 1.
In the first embodiment, guide rails 9a of guide rail mechanisms 9 (the ring guide rail mechanisms) are formed to be axially protruded to opposite axial positions at which the guide rails cover balk rings 4, 4'. Therefore, it is possible to prevent the fall of coupling sleeve 1 to the position where internal splines 1b of coupling sleeve 1 are brought into meshed-engagement with external splines 4b (or 4b') of balk ring 4 (or 4').

As set forth above, in the synchronizing device of the transmission of the first embodiment, the aforementioned guide rail mechanism 9 is comprised of guide rail 9a formed integral with synchronizer hub 5 in such a manner as to be axially protruded from the outer peripheral portion of the synchronizer hub and guide-rail contact surface 9b formed on coupling sleeve 1 and in contact with the axially-extending outer peripheral guide way 9a' of guide rail 9a.
For instance, suppose that the guide rail mechanism, provided to achieve the guide function for the coupling sleeve, is constructed as a separate guide member, newly added to the existing synchronizing device. This leads to some drawbacks, that is, the increased number of component parts, and the increased axial dimension and/or increased radial dimension of the device.
In contrast, in the first embodiment, guide rail 9a, constructing a part of guide rail mechanism 9, is formed integral with synchronizer hub 5, while guide-rail contact surface 9b, constructing the remainder of the guide rail mechanism, is formed on coupling sleeve 1. In spite of such a newly-added guide function, it is possible to provide or configure guide rail mechanism 9 having the further advantages of reduced manufacturing costs and reduced installation space.

In the synchronizing device of the transmission of the first embodiment, guide rail mechanism 9, comprised of guide rail 9a and guide-rail contact surface 9b, is set or provided in three circumferentially equiangular-spaced places. For instance, suppose that the guide rail mechanism is set or provided in one or two circumferential places. In such a case, it is impossible or difficult to keep the attitude of the coupling sleeve in a plane perpendicular to the central axis of the main shaft. Thus, it is impossible to certainly attain the coupling-sleeve fall preventive action. Alternatively, assuming that the guide rail mechanism is set or provided in four or more circumferential places, the setting space of the guide rail mechanisms is increased. In such a case, in order to ensure the mechanical strength against the transmitted torque, axial and/or radial dimensions of the device must be increased. In contrast, in the first embodiment, guide rail mechanism 9 is set or provided in three circumferentially equiangular-spaced places as described previously. Therefore, it is possible to certainly attain the coupling-sleeve fall preventive action by way of the three-point support that forms or constitutes a plane perpendicular to the central axis of the main shaft, while suppressing an increase in the setting space of guide rail mechanisms 9 to a minimum.

In the synchronizing device of the transmission of the first embodiment, balk rings 4, 4' have guide-rail insertion recessed portions 4d, 4d' formed by partially cutting or pulling out balk-ring external splines 4b, 4b' formed in their outer peripheral portions. Guide rails 9a are axially protruded from the outer peripheral portion of synchronizer hub 5 through respective guide-rail insertion recessed portions 4d, 4d' to opposite axial positions at which the guide rails cover balk rings 4, 4'. On the other hand, guide-rail contact surfaces 9b are bottom lands defined by partially cutting or pulling out internal splines 1b formed in the inner peripheral portion of coupling sleeve 1.
For instance, suppose that the guide rails of the guide rail mechanisms are provided in such a manner as to be axially protruded to the opposite axial positions at which the guide rails cover the balk rings, without changing the shape of each of the balk rings. In such a case, the guide rails must be formed in such a manner as to be axially protruded to cover the outside circumferences of the balk rings with no interference with the balk rings, and thus the coupling sleeve having enlarged inside and outside diameters must be used. This requires a change in design of the device, thereby resulting in undesirable upsizing of the synchronizing device in the radial direction.
In contrast, in the first embodiment, guide rails 9a are arranged in such a manner as to pass through respective guide-rail insertion recessed portions 4d, 4d' formed by partially cutting or pulling out balk-ring external splines 4b, 4b' formed in outer peripheral portions of the balk rings, whereas guide-rail contact surfaces 9b are bottom lands defined by partially cutting or pulling out internal splines 1b formed in the inner peripheral portion of coupling sleeve 1. Thus, it is possible to retain the synchronizing device at the existing size without undesirable upsizing of the synchronizing device in the radial direction.

Hereunder explained are the effects.
The synchronizing device of the transmission of the first embodiment can provide the following effects.

(1) In the synchronizing device of the transmission in which when coupling sleeve 1 is slidingly moved on synchronizer hub 5 during gear shift operation, the coupling sleeve is engaged with balk ring 4 (or 4') by a rotating synchronizing action, and then the coupling sleeve is further slidingly moved until it is engaged with clutch gear 3 (or 3') to complete the gear shift operation, guide rail mechanism 9 is provided between coupling sleeve 1 and synchronizer hub 5 to suppress or prevent a fall of coupling sleeve 1 during the sliding movement of the coupling sleeve. The aforementioned guide rail mechanism 9 is set in a sliding-movement range from a neutral position of coupling sleeve 1 to at least a position where a coupling-sleeve chamfer and a balk-ring chamfer abut with each other. Therefore, it is possible to ensure reliable gear shift operation by a smooth and stable rotating synchronizing action without lowering the synchronizing performance for a long term.

(2) The aforementioned guide rail mechanism 9 is comprised of guide rail 9a formed integral with synchronizer hub 5 in such a manner as to be axially protruded from the outer peripheral portion of the synchronizer hub and guide-rail contact surface 9b formed on coupling sleeve 1 and in contact with the axially-extending outer peripheral guide way 9a' of guide rail 9a. Therefore, in spite of a newly-added guide function, it is possible to provide or configure guide rail mechanism 9 having the further advantages of reduced manufacturing costs and reduced installation space.

(3) Guide rail mechanism 9, comprised of guide rail 9a and guide-rail contact surface 9b, is set or provided in three circumferentially equiangular-spaced places. Therefore, it is possible to certainly attain the coupling-sleeve fall preventive action by way of the three-point support that forms or constitutes a plane perpendicular to the central axis of the main shaft, while suppressing an increase in the setting space of guide rail mechanisms 9 to a minimum.

(4) Balk rings 4, 4' have guide-rail insertion recessed portions 4d, 4d' formed by partially cutting or pulling out balk-ring external splines 4b, 4b' formed in their outer peripheral portions. Guide rails 9a are formed to be axially protruded from the outer peripheral portion of synchronizer hub 5 through respective guide-rail insertion recessed portions 4d, 4d' to opposite axial positions at which the guide rails cover balk rings 4, 4'. On the other hand, guide-rail contact surfaces 9b are formed as bottom lands defined by partially cutting or pulling out internal splines 1b formed in the inner peripheral portion of coupling sleeve 1. Therefore, it is possible to set or provide guide rail mechanism 9 capable of preventing a fall of coupling sleeve 1 to such an extent (to such an axial position) that internal splines 1b of coupling sleeve 1 are brought into meshed-engagement with external splines 4b (or 4b') of balk ring 4 (or 4'), while retaining the synchronizing device at the existing size without undesirable upsizing of the synchronizing device in the radial direction.

### [SECOND EMBODIMENT]

The second embodiment is characterized in that a guide rail mechanism is configured or provided in such a manner as to overhang clutch gears.

First, the construction of the device is hereunder described.

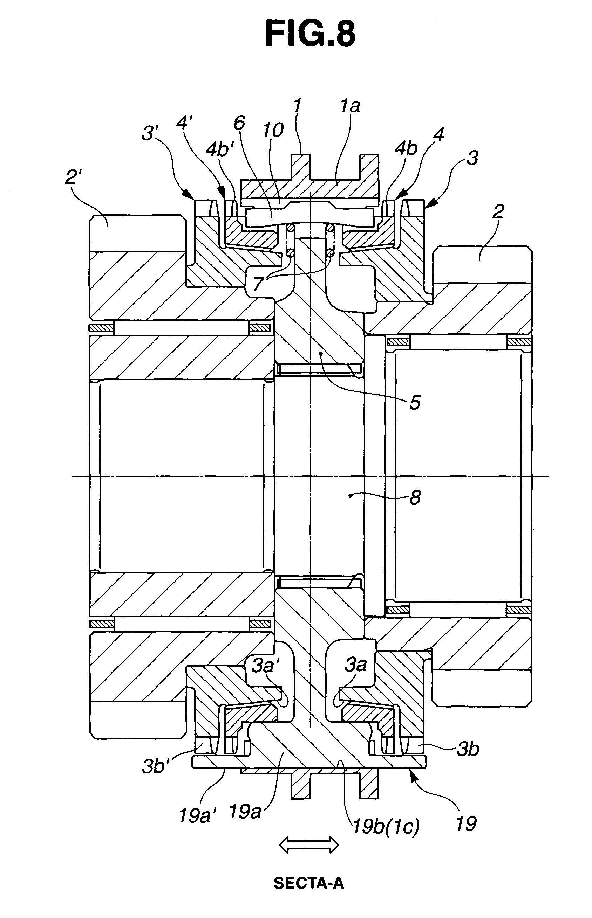

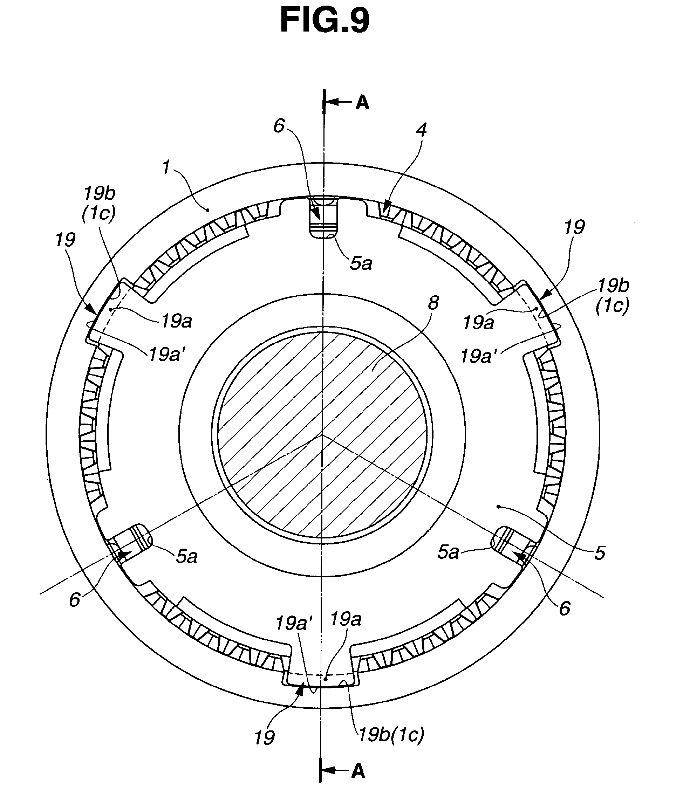

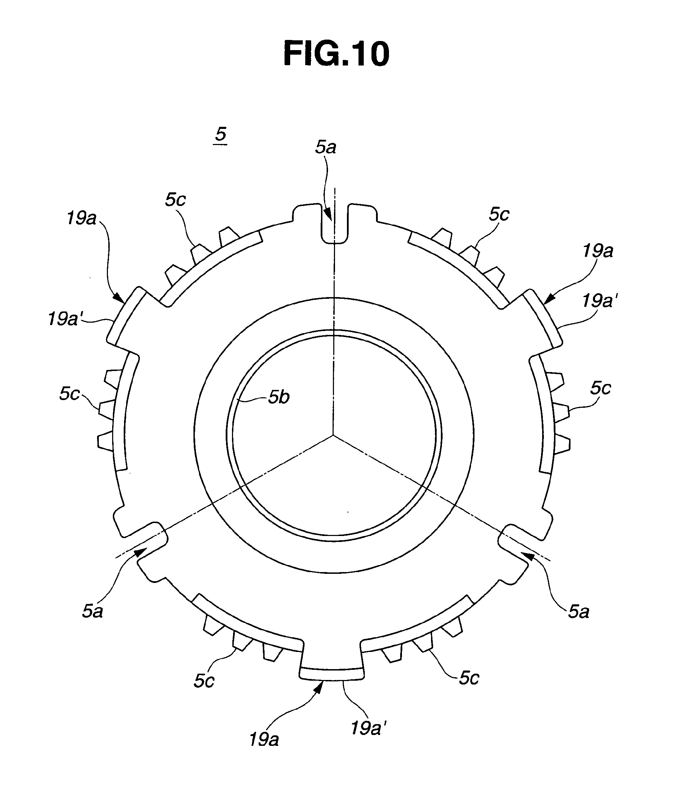

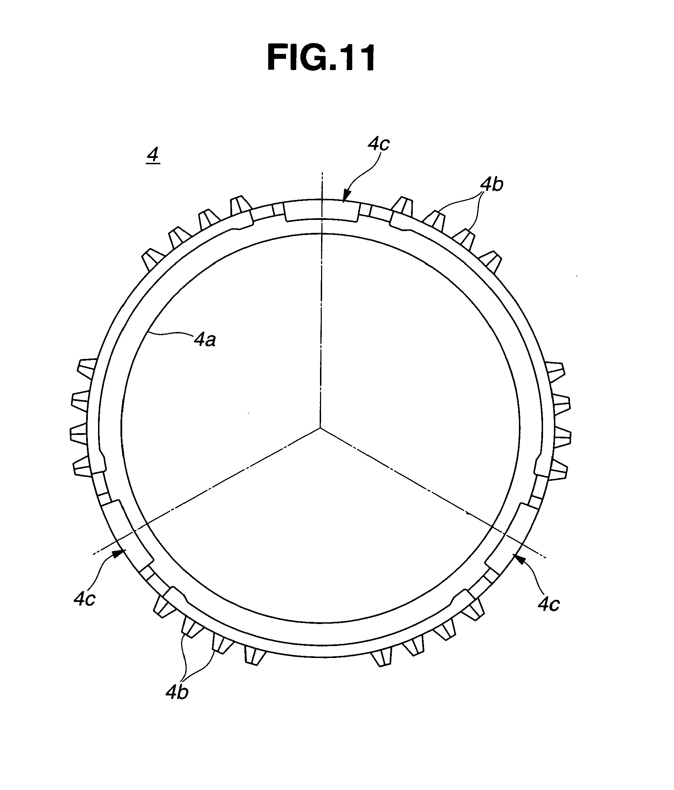

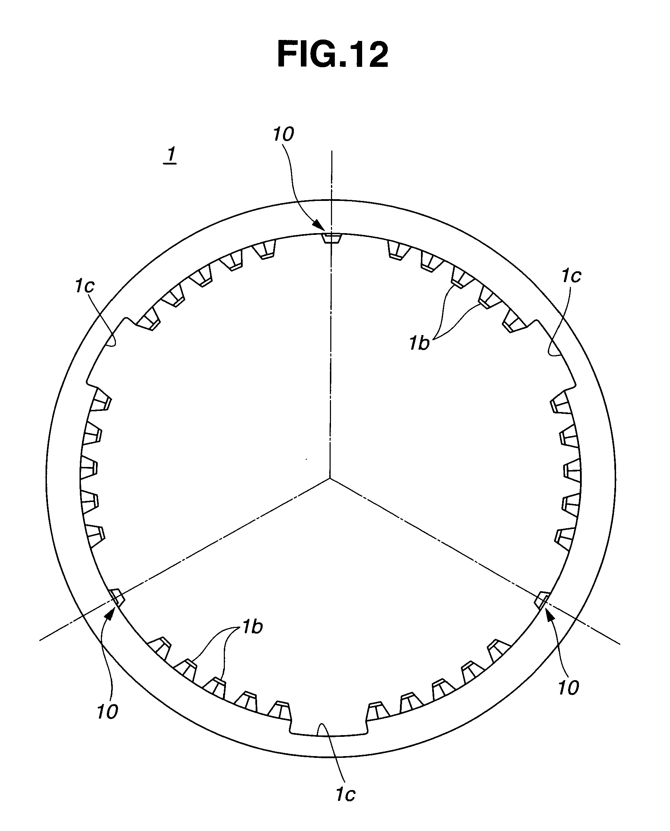

Fig. 8 is the longitudinal cross-sectional view showing the second embodiment of the synchronizing device of the transmission, taken along the line A-A of Fig. 9. Fig. 9 is the front elevation view showing the assembled state of the synchronizing device of the transmission of the second embodiment. Fig. 10 is the front elevation view showing the synchronizer hub of the synchronizing device of the transmission of the second embodiment. Fig. 11 is the front elevation view showing the balk ring of the synchronizing device of the transmission of the second embodiment. Fig. 12 is the front elevation view showing the coupling sleeve of the synchronizing device of the transmission of the second embodiment.

As shown in Figs. 8-9, the synchronizing device of the transmission of the second embodiment is provided with coupling sleeve 1, main gears 2, 2', clutch gears 3, 3', balk rings 4, 4', synchronizer hub 5, insert keys 6, spreader springs 7, 7, main shaft 8, a guide rail mechanism 19, and insert-key internal splines 10.
The basic construction of the synchronizing device of the second embodiment is similar to the first embodiment. Thus, the same reference signs used to designate elements in the first embodiment will be applied to the corresponding elements used in the second embodiment, while detailed description of the same reference signs will be omitted because the above description thereon seems to be self-explanatory.

The construction of guide rail mechanism 19 of the second embodiment is hereunder described in detail in reference to Figs. 8 to 12.
In the synchronizing device of the transmission of the second embodiment, when coupling sleeve 1 is slidingly moved on synchronizer hub 5 during gear shift operation, the coupling sleeve is engaged with balk ring 4 (or balk ring 4') by a rotating synchronizing action, and then the coupling sleeve is further slidingly moved until it is engaged with clutch gear 3 (or clutch gear 3') to complete the gear shift operation.

In the second embodiment, guide rail mechanism 19 is provided between coupling sleeve 1 and synchronizer hub 5 to suppress a fall of coupling sleeve 1 during sliding movement of the coupling sleeve. The guide rail mechanism 19 is set or provided in a sliding-movement range from the neutral position of coupling sleeve 1 to at least the position where the coupling-sleeve chamfer and the balk-ring chamfer abut with each other.

As seen in Fig. 8, the above-mentioned guide rail mechanism 19 is comprised of a guide rail 19a formed integral with synchronizer hub 5 in such a manner as to be axially protruded from the outer peripheral portion of the synchronizer hub in two opposite axial directions, and a guide-rail contact surface 19b in contact with an axially-extending outer peripheral guide way 19a' of guide rail 19a.

As seen in Fig. 9, guide rail mechanism 19, comprised of guide rail 19a and guide-rail contact surface 19b, is provided in three circumferentially equiangular-spaced places. The setting position of each of guide rail mechanisms 19 is determined as an intermediate position between the two insert keys 6, 6 circumferentially adjacent to each other.

As seen in Fig. 12, coupling sleeve 1 has guide-rail insertion recessed portions 1c cut out at angular positions corresponding to bottom lands defined by partially cutting or pulling out internal splines 1b formed in the inner peripheral portion of coupling sleeve 1.

As can be seen in Fig. 8, guide rails 19a are formed to be axially protruded from the outer peripheral portion of synchronizer hub 5 through the outside circumferences of balk rings 4, 4' to opposite axial positions at which the guide rails cover the outside circumferences of clutch gears 3, 3'. That is to say, guide rails 19a are set or provided in such a manner as to overhang clutch gears 3, 3' as well as balk rings 4, 4'.

As seen in Figs. 8-9, guide-rail contact surfaces 19b are formed as recessed bottom faces of guide-rail insertion recessed portions 1c.
Each of guide-rail contact surfaces 19b is formed on the inner periphery of coupling sleeve 1 over the entire axial width.

Hereunder explained is the operation. In the second embodiment, guide rails 19a of guide rail mechanisms 19 (the ring guide rail mechanisms) are formed to be axially protruded to opposite axial positions at which the guide rails cover clutch gears 3. 3' as well as balk rings 4, 4'. Therefore, it is possible to prevent the fall of coupling sleeve 1 to the position where internal splines 1b of coupling sleeve 1 are brought into meshed-engagement with external splines 3b (or 3b') of clutch gears 3 (or 3') and thus the gear shift operation is completed.

As set forth above, in the synchronizing device of the transmission of the second embodiment, guide-rail insertion recessed portions 1c are formed and cut out in the inner peripheral portion of coupling sleeve 1 at angular positions corresponding to bottom lands defined by partially cutting or pulling out internal splines 1b formed in the coupling-sleeve inner periphery. Guide rails 19a are formed to be axially protruded from the outer peripheral portion of synchronizer hub 5 through the outside circumferences of balk rings 4, 4' to opposite axial positions at which the guide rails cover the outside circumferences of clutch gears 3, 3'. On the other hand, guide-rail contact surfaces 19b are formed as recessed bottom faces of guide-rail insertion recessed portions 1c.
For instance, suppose that the guide rails of the guide rail mechanisms are provided in such a manner as to be axially protruded to the opposite axial positions at which the guide rails cover the clutch gears as well as the balk rings, without changing the shape of each of the clutch gears as well as the shape of each of the balk rings. In such a case, the guide rails must be formed in such a manner as to be axially protruded to cover the outside circumferences of the clutch gears as well as the outside circumferences of the balk rings. Assuming that the guide-rail contact surfaces are formed only by partially cutting or pulling out the internal splines of the coupling sleeve, the coupling sleeve having enlarged inside and outside diameters must be used. This leads to the problem of the undesirably increased radial dimension of the synchronizing device.
In contrast, in the second embodiment, guide rails 19a are arranged in such a manner as to pass through respective guide-rail insertion recessed portions 1c formed by partially cutting out internal splines 1b formed in coupling sleeve 1, whereas guide-rail contact surfaces 19b are formed as recessed bottom faces of guide-rail insertion recessed portions 1c. Thus, it is possible to retain the synchronizing device at the existing size without changing its radial dimension.
The other operations of the device of the second embodiment are the same as those described for the first embodiment.

Hereunder explained are the effects.
The synchronizing device of the transmission of the second embodiment can provide the following effects in addition to the effects (1), (2), and (3) previously described for the first embodiment.

(5) Guide-rail insertion recessed portions 1c are formed and cut out on the inner peripheral portion of coupling sleeve 1 at angular positions corresponding to bottom lands defined by partially cutting or pulling out internal splines 1b formed in the coupling-sleeve inner periphery. Guide rails 19a are formed to be axially protruded from the outer peripheral portion of synchronizer hub 5 through the outside circumferences of balk rings 4, 4' to opposite axial positions at which the guide rails cover the outside circumferences of clutch gears 3, 3'. On the other hand, guide-rail contact surfaces 19b are formed as recessed bottom faces of guide-rail insertion recessed portions 1c. Therefore, it is possible to set or provide guide rail mechanism 19 capable of preventing a fall of coupling sleeve 1 to such an extent (to such an axial position) that internal splines 1b of coupling sleeve 1 are brought into meshed-engagement with external splines 3b (or 3b') of clutch gear 3 (or 3') and thus the gear shift operation is completed, while retaining the synchronizing device at the existing size without undesirable upsizing of the synchronizing device in the radial direction.

As set forth above, the synchronizing device of the transmission of the invention is explained in detail in reference to the first and second embodiments.
While the foregoing is a description of the preferred embodiments carried out the invention, it will be understood that the invention is not limited to the particular embodiments shown and described herein, but that various changes and modifications may be made without departing from the scope or spirit of this invention as defined by the following claims.

The first and second embodiments are exemplified in a key-type synchronizing device. It will be appreciated that the synchronizing device of the invention is not limited to such a key-type synchronizing device. For instance, the concept of the invention can be applied to another type of synchronizing device, such as a pin-type synchronizing device.

Each of the first and second embodiments illustrates a guide rail mechanism, which is comprised of a guide rail formed integral with a synchronizer hub and a guide-rail contact surface formed on a coupling sleeve. In lieu thereof, another type of guide rail mechanism may be constructed by a guide rail member separated from the synchronizer hub and integrally fixedly connected to the synchronizer hub and a guide-rail contact member having a guide-rail contact surface and separated from the coupling sleeve and integrally fixedly connected to the coupling sleeve.
Briefly speaking, it will be recognized that a concrete mechanism of a means, by which a fall of the coupling sleeve is suppressed or prevented during sliding movement, is not limited to the previously-described first and second embodiments, but that any type of guide rail mechanism, which is disposed between the coupling sleeve and the synchronizer hub to suppress a fall of the coupling sleeve during sliding movement, and set or provided in a sliding-movement range from the neutral position of the coupling sleeve to at least the position where the coupling-sleeve chamfer and the balk-ring chamfer abut with each other, may be used.

The synchronizing device of the invention can be applied to a manual transmission in which gear shift operation is made by manually moving a shift lever by the driver. The synchronizing device of the invention can be applied to an automatic manual transmission, often called "automatic MT" that adds a mechanism by which gear shift operation is automated instead of manual gear shift operation (manual clutch operation) by the driver.

## Claims

1. A synchronizing device of a transmission, in which when a coupling sleeve is slidingly moved on a synchronizer hub during gear shift operation, the coupling sleeve is engaged with a balk ring by a rotating synchronizing action, and then the coupling sleeve is further slidingly moved until the coupling sleeve is engaged with a clutch gear to complete the gear shift operation, the synchronizing device comprising:
a guide rail mechanism, provided between the coupling sleeve and the synchronizer hub, to suppress a fall of the coupling sleeve during the sliding movement of the coupling sleeve; and
the guide rail mechanism being set in a sliding-movement range from a neutral position of the coupling sleeve to at least a position where a coupling-sleeve chamfer and a balk-ring chamfer abut with each other.

2. The synchronizing device of the transmission as claimed in claim 1, wherein:
the guide rail mechanism comprises a guide rail formed integral with the synchronizer hub in such a manner as to be axially protruded from an outer peripheral portion of the synchronizer hub, and a guide-rail contact surface in contact with an axially-extending outer peripheral guide way of the guide rail.

3. The synchronizing device of the transmission as claimed in claim 2, wherein:
the guide rail mechanism, which comprises the guide rail and the guide-rail contact surface, is set in three circumferentially equiangular-spaced places.

4. The synchronizing device of the transmission as claimed in either one of preceding claims 1 to 3, wherein:
the balk ring has a guide-rail insertion recessed portion formed by partially pulling out external splines formed in an outer peripheral portion of the balk ring;
the guide rail is formed to be axially protruded from the outer peripheral portion of the synchronizer hub through the guide-rail insertion recessed portion to an axial position at which the guide rail covers the balk ring; and
the guide-rail contact surface is a bottom land defined by partially pulling out internal splines formed in an inner peripheral portion of the coupling sleeve.

5. The synchronizing device of the transmission as claimed in either one of preceding claims 1 to 3, wherein:
the coupling sleeve has a guide-rail insertion recessed portion formed and cut out at an angular position corresponding to a bottom land defined by partially pulling out internal splines formed in an inner peripheral portion of the coupling sleeve;
the guide rail is formed to be axially protruded from the outer peripheral portion of the synchronizer hub through an outside circumference of the balk ring to an axial position at which the guide rail covers an outside circumference of the clutch gear; and
the guide-rail contact surface is formed as a recessed bottom face of the guide-rail insertion recessed portion.

6. A synchronizing device of a transmission, in which when a coupling sleeve is slidingly moved on a synchronizer hub during gear shift operation, the coupling sleeve is engaged with a balk ring by a rotating synchronizing action, and then the coupling sleeve is further slidingly moved until the coupling sleeve is engaged with a clutch gear to complete the gear shift operation, the synchronizing device comprising:
means for suppressing a fall of the coupling sleeve during the sliding movement of the coupling sleeve, in a sliding-movement range from a neutral position of the coupling sleeve to at least a position where a coupling-sleeve chamfer and a balk-ring chamfer abut with each other.
